# EUROPÄISCHE PATENTANMELDUNG

(11) **EP 0 716 197 A2**
(43) Veröffentlichungstag der Anmeldung: **12.06.1996**
(21) Anmeldenummer: 95118836.6
(22) Anmeldetag: 30.11.1995
(51) Int. Cl.: E04F 13/00, F16L 59/02

(54) **Mit Polymerschaum gefüllte Profilplatten**

(30) Priorität: 07.12.1994 DE 4443558
(71) Anmelder: RÖHM GMBH, D-64293 Darmstadt (DE)
(72) Erfinder: Benz, Volker, Dr., D-64739 Höchst (DE); Müller, Michael, Dr., D-64625 Bensheim (DE); Meier-Kaiser, Michael, Dr., D-64319 Pfungstadt (DE)

(57) **Zusammenfassung**

Die Erfindung betrifft Profilplatten aus transparentem Kunststoff mit breiten Kammern als Elemente für die transparente Wärmedämmung, wobei die Kammern mit einem Kunststoff-Schaum hoher Transparenz gefüllt sind.

## Beschreibung

### Gebiet der Erfindung

Die Erfindung betrifft mit Polymerschaum gefüllte Profilplatten, die insbesondere als Elemente für transparente Wärmedämmung geeignet sind.

### Stand der Technik

Geschäumte Polyacrylatplatten stellen aufgrund ihrer geringen Dichte und des reduzierten Materialeinsatzes prinzipiell eine attraktive Möglichkeit der transparenten Wärmedämmung dar. Ihr Einsatz ist vor allem auf dem Bausektor, insbesondere für Fassadenbekleidung aber auch für sonstige räumliche Einheiten mit erwünscht niedrigem Wärmedurchgang interesant. Wie auch bei allen übrigen derzeit bekannten und erprobten Lösungen für Fassadengestaltungen mittels Kunststoff-Elementen ist die Fassadenkonstruktion um solche polymeren "Schaumstoffplatten" herum aufwendig und teuer. Eine Lösung besteht z.B. aus Elementen mit je zwei Scheiben 8 mm dicken Sicherheitsglases, zwischen denen sich die Schaumplatte befindet, wobei die Ränder versiegelt sind. Die für derart schwere Elemente benötigte Unterkonstruktion muß entsprechend ausgelegt sein und ist in jedem Fall teuer.
Hohlkammerplatten aus thermoplastischem Kunststoff sind seit längerem bekannt (DE-A 16 09 777; DE-A 22 30 901; DE-A 29 13 074). Sie bestehen in der Regel aus zwei Außengurten, gegebenenfalls einer parallelen Mittelebene und senkrecht zu den Plattenflächen dazwischen angeordneten Verbindungsstegen. Die sogenannten Stegmehrfachplatten wie "Stegdoppel-" "Stegdreifach-" und "Stegvierfachplatten" weisen günstige mechanische Eigenschaften bei geringem Gewicht und insbesondere sehr günstige Wärmedurchgangszahlen auf. Sie finden vielfache Anwendung auf verschiedenen Sektoren, wie z.B. im Gewächshausbau, in Wintergärten u.ä.
Im Laufe der Zeit sind mannigfaltige Modifikationen vorgeschlagen worden, die einerseits auf verbesserte Herstellbarkeit, andererseits auf verbesserte Qualität, insbesondere verbesserte Witterungsbeständigkeit der Hohlkammerplatten abzielten (vgl. DE-A 33 12 611; DE-A 32 44 953, deutsche Gebrauchsmuster G 82 33 007.0, G 85 14 365.0)

### Aufgabe und Lösung

Für eine weite Verbreitung der transparenten Wärmedämmung und hohe Energie-Einsparpotentiale sind kostengünstige Lösungen gefragt. Das bedeutet, daß sowohl die Herstellung der Elemente selbst als auch speziell die Konstruktionen zu deren Einbau bzw. Aufhängung zu niedrigen Kosten realisierbar sein müssen.
Eine interessante Lösung wird z.B. in dem deutschen Gebrauchsmuster G 94 11 380.0 vorgeschlagen. Darin wird ein transparenter, wärmedämmender, geschlossener Hohlkörper als Bestandteil einer Gebäudefassade beschrieben. Der Hohlkörper weist zwei parallel angeordnete Platten auf, die durch parallel zueinander zwischen den Platten angeordnete Stege miteinander verbunden sind, wodurch Hohlkammern gebildet werden, mit der Maßgabe, daß die Stege an der Gebäudefassade waagrecht verlaufen und daß die Ausdehnung der Hohlkammern in senkrechter Richtung höchstens ein Viertel der Ausdehnung der Breite beträgt. Eine derartige Stegplatte mit geschlossener Außenseite/Oberfläche stellt an sich ein relativ leichtgewichtiges Element für die transparente Wärmedämmung dar, welches direkt auf einer wenig aufwendigen Unterkonstruktion montiert werden kann. Fassadenverkleidungen aus lichtdurchlässigen Elementen, die im Abstand von der Gebäudewand angebracht sind, so daß eine Hinterlüftung möglich ist, sind Gegenstand der DE-A 32 12 489. Als wärmedämmende Elemente werden auch Stegdoppelplatten genannt.
Der vorliegenden Erfindung lag nun die Aufgabe zugrunde, ein ähnlich vorteilhaftes System zu entwickeln, wobei von geschäumtem Polymermaterial ausgegangen werden sollte.
Zur Lösung der Aufgabe werden erfindungsgemäß als Elemente für transparente Wärmedämmung Profilplatten PP aus transparentem Kunststoff mit breiten Kammern vorgeschlagen, wobei die Kammern mit einem Kunststoff-Schaum hoher Transmission gefüllt sind.
Die Breite der individuellen Kammern sollte zweckmäßig ≧ 60 mm, vorzugsweise ≧ 150 mm, besonders bevorzugt ≧ 300 mm und bis zu 500 mm betragen. Der Gurtabstand (Abstand zwischen oberer und unterer Plattenfläche) kann z.B. zwischen 20 und 200 mm liegen. Zur Gewährleistung der Transparenz sind die erfindungsgemäßen Profilkammerplatten vorzugsweise mit einem Schaum gefüllt, dessen Transparenz > 30 % des auftreffenden Lichtes beträgt (die Bestimmung der Transparenz erfolgt mittels eines Spektralphotometers mit großer Integrationskugel (O > 500 mm).
Als Material für die Profilplatten PP kommen an sich übliche transparente Kunststoffe, speziell Thermoplasten, insbesondere ausgewählt aus der Gruppe bestehend aus Polymethylmethacrylat, Polycarbonat und Polystyrol infrage, daneben auch Polyvinylchlorid, Polyester.

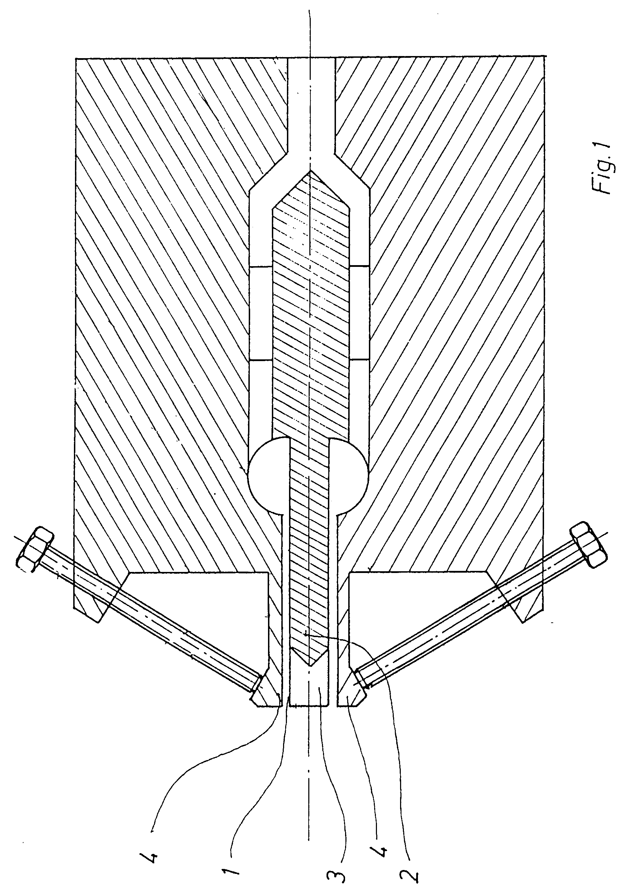

Geschäumte Polymermaterialien, die sich für die Füllung der Profilplatten eignen, können z.B. aus gegossenem PMMA, extrudiertem PMMA, Polymethacrylimid (DE-A 27 26 259), Polystyrol u.ä. gewonnen werden. Vorteilhaft ist eine hohe Transparenz des geschäumten Materials. Als Richtwert sei eine Transparenz > 30 % angegeben.
Die erfindungsgemäß einzusetzenden Profilplatten PP können analog den Hohlkammerplatten des Standes der Technik durch Extrusion auf einem mit einem geeigneten Extrusionswerkzeug ausgestatteten Extruder hergestellt werden.
Die Extrusionsdüse (Fig. 1) enthält vorteilhafterweise zwei über die Breite der Düse geradlinig und parallel verlaufende, durch Lippe (3) gebildete Schlitze (2) zur Extrusion von zwei parallelen ebenen Außenwänden der Hohlkammerplatte und ein Kernstück (1) das zwischen den Schlitzen angeordnet ist und in das eine Vielzahl von Querschlitzen (4) eingeschnitten ist, die in die Schlitze münden und zur Extrusion von Stegen dienen, welche die Außenwände der extrudierten Hohlkammern miteinander verbinden. Bei einer besonderen Ausgestalung kann jeweils eine der beiden Lippen, welche die Schlitze bilden, flexibel ausgebildet sein, und die flexiblen Lippen lassen sich durch eine Mehrzahl voneinander unabhängiger Stellglieder verstellen.
Die Herstellung von Polymerschäumen PS geeigneter Qualität ist an für sich bekannt. Der Polymerschaum PS kann beispielsweise in einem separaten Arbeitsgang hergestellt werden. Geeignete Verfahren sind z.B. Gießverfahren (vgl DE-PS 10 17 784) oder Extrusion (DE-A 42 07 057).
Im Falle der Herstellung per Gießverfahren werden z.B. einem Gemisch aus Methylmethacrylat (MMA) und Polymethylmethacrylat (PMMA) oder einem Copolymeren des MMA ein an sich bekannter Radikalinitiator wie z.B. ein Azo-Initiator wie AIBN in Mengen von 0,1 bis 1 Gew.-% (bezogen auf die Monomeren) und Kohlensäureschnee zugesetzt - als Anhalt seien etwa 5 Gew.-% bezogen auf die Monomeren genannt - und durch Rühren gleichmäßig verteilt. Anschließend wird das Gemisch in eine Form oder Kammer verfüllt und erwärmt. Während des Einsetzens der Polymerisation und Gelierung wird das CO₂ ausgetrieben und erzeugt Poren. Die Dichte und Transmission des Schaumes lassen sich u.a. über die Menge des zugesetzten CO₂-Schnees steuern. Selbstverständlich können auch andere zweckdienliche Verfahren zur Herstellung des Polymerschaums angewendet werden. So kommen Fluorkohlenwasserstoffe, Wasser oder anorganische Verbindungen, die bei erhöhten Temperaturen Wasser abgeben, als Treibmittel in Betracht. Sie werden dem Sirup bei der an sich bekannten Herstellung von gegossenem PMMA zugesetzt. Die fertige PMMA-Platte wird dann durch anschließende Wärmebehandlung geschäumt.

Der separat hergestellte Schaum kann in Streifen geeigneter Breite und Dicke in die Kammern der gleichfalls separat hergestellten Profilplatten eingeschoben werden. Die schaumgefüllten Hohlkammerplatten können z.B. in an sich bekannter Weise an den Kanten verschlossen werden, z.B. durch Verschlußelmente oder durch gasdichtes Abquetschen (vgl. deutsches Gebrauchsmuster G 81 37 938.2)

Das Verfahren des Extrusionsschäumens ist ebenfalls an sich bekannt (vgl. DE-A 42 07 057). Nach dem Verfahren der Direktbegasung wird der geschmolzene Kunststoff unter Verwendung eines geeigneten Treibmittels, beispielsweise eines sauerstoffhaltigen aliphatischen Treibmittels extrusionsgeschäumt. Dabei wird z.B. die Schmelze oberhalb der Glasübergangstemperatur des reinen Kunstsstoffs unter Druck mit dem Treibmittel vermischt und die Mischung unter Aufrechterhaltung des Drucks bis unter die Schmelztemperatur des reinen Kunststoffs auf eine Temperatur abgekühlt, bei der sie noch schmelzflüssig ist und die abgekühlte Mischung durch Entspannung aufgeschäumt wird.

In einer bevorzugten Ausführungsform werden Stegplatte und Schaum gleichzeitig extrudiert, z.B. in einem dem Celuka-Verfahren analogen Herstellprozeß. Dabei stellt die gleichzeitig extrudierte Hohlkammerplatte den Formkanal für die aufzuschäumende Schmelze dar.

Die vorliegende Erfindung sei durch die folgenden Beispiele erläutert. Die Herstellung der Polymerisationskammer kann im Anschluß an Houben-Weyl, Methoden der Org. Chemie, Bd. E20/2, S. 1145 - 1147, Georg Thieme 1987 vorgenommen werden.

### BEISPIELE

### Beispiel 1

### Herstellung eines PMMA-Schaums im Gießverfahren:

In 2000 g Methacrylsäuremethylester, in dem 10 g Azodiisobuttersäuredinitril gelöst sind und der durch eine äußere Eis-Kochsalz-Mischung auf wenigstens 0 Grad C abgekühlt wird, werden 1000 g Kohlensäureschnee und 3000 g perlförmiges Polymethylmethacrylat mit einer Teilchengröße von 0,05 bis 0,1 mm Durchmesser eingetragen. Bei einer Temperatur zwischen -10 und 0 Grad C stellt das Gemisch eine leicht gießbare Masse dar. Sie wird, nachdem die Temperatur auf 0 bis 10 Grad C angestiegen ist, in eine Polymerisationskammer gefüllt und diese in ein Wasserbad von 50 Grad C gebracht. Nach 10 Minuten ist die Masse durch Gelieren so fest geworden, daß die die Kammerwände zusammenhaltende Verklebung entfernt werden kann. Die Kammer wird anschließend 30 Minuten mit Wasserdampf behandelt, wobei die Masse unter weiterem Aufblähen erhärtet. Die so erhaltene Scheibe weist eine glatte Oberfläche auf, ist von Poren durchsetzt und besitzt ein spezifisches Gewicht von 0,27 (gegenüber einer Dichte des Polymethacrylats von 1,19).

### Beispiel 2

### Herstellung einer schaumgefüllten Profilplatte

Aus einer PMMA-Formmasse (PLEXIGLAS ® Formmasse Y8H der Röhm GmbH) wird gemäß DE-A 16 09 777 und DE-A 15 04 800 eine Stegplatte mit einem Abstand der Gurte von 32 mm und einem Abstand der Stege von 300 mm extrudiert. Die Dicke der Gurte und Stege beträgt jeweils 1,6 mm. Aus der Schaumplatte gemäß Beispiel 1 werden Streifen der Breite von 300 mm geschnitten und in die Kammern der ebenfalls auf 1500 mm abgelängten Stegplatte eingepaßt. Die Transmission der schaumgefüllten Profilplatte beträgt 39 %.

## Patentansprüche

1. Profilplatten aus transparentem Kunststoff mit breiten Kammern als Elemente für die transparente Wärmedämmung,
dadurch gekennzeichnet,
daß die Kammern mit einem Kunststoff-Schaum hoher Transparenz gefüllt sind.

2. Profilplatten gemäß Anspruch 1, dadurch gekennzeichnet, daß der Kunststoffschaum eine Transparenz > 30 % besitzt.

3. Profilplatten gemäß Anspruch 1, dadurch gekennzeichnet, daß die Profilplatten aus einem thermoplastischen Kunststoff geformt sind.
